# EUROPEAN PATENT APPLICATION

(11) **EP 1 603 319 A1**
(43) Date of publication of application: **07.12.2005**
(21) Application number: 05008471.4
(22) Date of filing: 19.04.2005
(51) Int. Cl.: H04M 3/54, H04M 7/00, H04Q 3/00

(54) **Method for forwarding a call in a fixed telecommunication's network and such network**

(30) Priority: 02.06.2004 EP 04291375
(71) Applicant: ALCATEL, 75008 Paris (FR)
(72) Inventor: Münch, Rainer, 71706 Markgröningen (DE)
(74) Representative: Brose, Gerhard

(57) **Abstract**

The invention concerns a method for forwarding a call in a fixed telecommunication's network, where subscriber-specific routing information exists in data formats depending on the kind of connecting said subscriber to the network and where said routing information is stored in separate data bank elements (HSS, RTG) being data format specific, where the information on where a specific routing information is stored, is stored in a further data bank element (SLF) as well as such a network.

## Description

The invention concerns a method for forwarding a call in a fixed telecommunication's network according to the preamble of claim 1 and such a network.

The connection setup in the transport level of a telecommunication's network is preceded and controlled by the call setup in the control level. The network element in the control level, from which this call setup is starting, has to know which network element the call is to be forwarded. This can be retrieved from a data bank element.

Subscribers are connected to a fixed telecommunication's network of the coming generation, now being called next generation network NGN, in different ways; additional network functions are added. Each network function involved in the call setup has to know to which network element the call is to be forwarded.

Here the invention finds a remedy with the method according to claim 1 and the network according to claim 8.

This means that the subscriber specific routing data are stored in separate data bank elements. A further data bank element references to these data bank elements.

The invention is now being discussed with reference to the drawing.

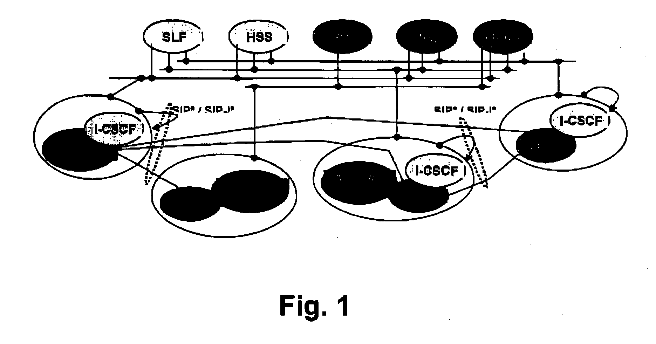

- Figure 1: shows an extract of an example of a fixed telecommunication's network according to the invention in which the method according to the invention can be carried out.

Currently, the functional architecture of Fixed Next Generation Networks (NGN) is being defined in ETSI Technical Committee TISPAN. Some parts of the functional architecture will be based on 3GPP Release 6; some functional components have to be added to the functional architecture.

A functional architecture means to identify and place appropriately functional components and elements. This means also to identify the relationship and communication between these functional components and elements.

Part of this relationship and communication is to identify and address all elements for routing purposes, i.e. to define procedures for routing the call and connection between the components and elements concerned.

Figure 1 shows an example of NGN architecture. Although this figure is mainly given for illustrative purposes and does not represent the final TISPAN-NGN architecture, because the work on it in TISPAN is still on going, it however contains components and elements which are needed in an NGN architecture, independently of the final architecture and the final terminology. These components and elements are:
1) Based on 3GPP: S-CSCF, I-CSCF, MGCF, SLF, HSS.
2) To be added: THGCF, AGCF, USPF.
3) Furthermore to be added: Rtg.

These functions may occur multiple times in a network, depending on the mapping to physical network elements and on the architecture of the network concerned.

This description is given for informative purposes only to better understand the routing idea.

An S-CSCF (Serving Call Session Control Function) has the following responsibilities:
- It is the main user agent for the User Equipment.
- It controls session and call for both multimedia and monomedia sessions.
- It coordinates session/call and services/features.
- Access to own application functions.
- Access to own or co-operating application service platforms.
- Communication with subscriber profile area together with I-CSCF (SLF, HSS, USPF).
- Communication with Rtg.
- Communication with "Others".
- QoS handling, including end-to-end negotiation.
- Communication with Domain Name System (DNS).
- Stores the address by which the Proxy-CSCF in the visited network can be reached.

An I-CSCF (Interrogating Call Session Control Function) assigns the S-CSCF in co-operation with SLF and HSS.

An MGCF (Media Gateway Control Function) has the following responsibilities:
- Control of a Trunking Gateway via H.248 for TDM and CAS trunks.
- Endpoint for SIGTRAN users.
- Handling of PSTN/ISDN signaling (e.g. ISUP) in co-operation with PSTN/ISDN Appl transit.
- Co-operation with PSTN/ISDN Appl. Transit.

An SLF (Subscription Locator Function) has the following responsibilities:
- Subscription locator functions (needed if the HSS, USPF and Rtg are distributed).
- Returns HSS, USPF or Rtg address.

A HSS (Home Subscriber Server) has the following responsibilities:
- Home subscriber server functions (without HLR).

An AGCF (Access Gateway Control Function) has the following responsibilities:
- Control of an Access Gateway via H.248/MGCP for TDM subscribers (including connected via concentrator and V5.2 access network).
- Endpoint for SIGTRAN users.
- Handling of PSTN/ISDN signaling (e.g. ISUP, DSS1) in co-operation with PSTN/ISDN Appl local.
- Co-operation with PSTN/ISDN Appl local.

A THGCF (Topology Hiding Gateway Control Function) has the following responsibilities:
- First entity in the home network when registration is taking place.
- First entity in the network for another network (interdomain sessions).
- Performs topology hiding, including address and port translation.
- Controls the Resource and Admission Control Function (RACF) for domain change.

A USPF (User Service Profile Functions) has the following responsibility:
- User service profile functions for TDM subscribers.

An Rtg (Routing) has the following responsibility:
- Performs routing functions, e.g. determination of THGCF, MGCF etc.

What is routing? All network elements have to be identified and addressed. Based on the actual conditions, the call is appropriately routed to the subsequent network element.

In other words, the requirement is to identify and address all elements for routing purposes, i.e. to define procedures for routing the call between the components and elements concerned, such that all requirements for routing can be met.

The objective of ETSI TC TISPAN is that some parts of the functional architecture will be based on 3GPP Release 6. Some functional components have to be added to the functional architecture. For example, the functions THGCF and Rtg have to be added.

The routing procedure has to identify and address all network elements, including the added ones. The idea is to find a solution, which enables the network operator to employ the same approach for identifying and addressing all network elements.

Given is the 3GPP defined approach: The S/I-CSCF accesses the SLF to get an HSS address and accesses the HSS to get the S-CSCF address relevant to the called user.

In a fixed network environment, some more aspects have to be taken into consideration, e.g. topology hiding, service inter-working with PSTN/ISDN, TDM routing, different approaches of interconnecting networks.

This also means that the identification of subsequent network elements for routing purposes requires modifications to a puristic 3GPP approach.

To solve these problems, the following approach can be used:

As mentioned above, the idea is to find a solution, which enables the network operator to employ the same approach for identifying and addressing all network elements.

The S/I-CSCF accesses the SLF (3GPP apprvach).

The SLF returns either the HSS address (3GPP approach, not handled further here, with one important exception, see Table 2 below) or the Rtg address.

The Rtg address is returned if the proper 3GPP approach is not sufficient, i.e. whenever the HSS capabilities are not sufficient and/or network elements have to be identified and addressed which cannot be identified and addressed by the current 3GPP approach. Rtg provides all information, which are missing in the proper SLF/HSS cycle.

The S/I-CSCF now accesses Rtg.

The Rtg returns the address of the subsequent network element. This function is performed by taking into account all relevant aspects, e.g. time, destination, origin, service requirements, bilateral agreements between network operators, TDM routing model, PSTN/ISDN routing data etc.

The following tables give some more details.

Table 1 shows the standard proper 3GPP case. This is given for information only.

**Table 1 -**

| Standard 3GPP SLF/HSS Approach | | |
|---|---|---|
| Destination | Address returned by SLF | Address returned by HSS |
| NGN user in own NGN | HSS | S-CSCF of destination user |

Table 2 shows an enhancement of the standard case in Table 1 where the destination user is served by an AGCF. This is also part of the new idea.

**Table 2 -**

| Destination User Served By AGCF | | |
|---|---|---|
| Destination | Address returned by SLF | Address returned by HSS |
| User served by an AGCF in the own NGN | HSS | AGCF of destination user |

Table 3 shows some more details for other cases involving Rtg (part of the new idea).

**Table 3 -**

| Other Cases Involving Rtg | | |
|---|---|---|
| Destination | Address returned by SLF | Address returned by Rtg |
| User in another NGN | Rtg | THGCF in own NGN or THGCF of peer NGN |
| User in own PSTN/ISDN | Rtg | MGCF |
| User in another PSTN/ISDN | Rtg | MGCF |
| User served by an AGCF in the own NGN | Rtg | Option 1: S-CSCF of destination user Option 2: AGCF of destination user |

## Claims

1. Method for forwarding a call in a fixed telecommunication's network, where subscriber-specific routing information exists in data formats depending on the kind of connecting said subscriber to the network and where said routing information is stored in separate data bank elements (HSS, RTG) being data format specific, **characterized in, that** the information on where a specific routing information is stored, is stored in a further data bank element (SLF).

2. Method according to claim 1, **characterized in, that** one of the separate data bank elements is a home subscriber server (HSS).

3. Method according to claim 1, **characterized in, that** one of the separate data bank elements is a server (RTG) for performing routing functions.

4. Method according to claim 2, **characterized in, that** if the call is to be directed to a subscriber to the own fixed telecommunication's network, who is connected via an access gateway, the further data bank element (SLF) will refer to the home subscriber server (HSS) and this will refer to a control level element with a serving call session control function (S-CSCF) or to a control level element with an access gateway control function (AGCF) assigned to this subscriber.

5. Method according to claim 3, **characterized in, that** if the call is to be directed to a subscriber to the own fixed telecommunication's network, who is connected via an access gateway, the further data bank element (SLF) will refer to the server (RTG) for performing routing functions and this will refer to a control level element with a serving call session control function (S-CSCF) or to a control level element with an access gateway control function (AGCF) assigned to this subscriber.

6. Method according to claim 3, **characterized in, that** if the call is to be directed to a subscriber in an other telecommunication's network, the further data bank element (SLF) will refer to the server (RTG) and this will refer to a respective control level element (THGCF) with a topology hiding gateway control function of the own or the other network.

7. Method according to claim 3, **characterized in, that** if the call is to be directed in a telecommunication's network of the type PSTN or ISDN, the further data bank element (SLF) will refer to the server (RTG) and this will refer to a respective control level element (THGCF) with a topology hiding gateway control function of the own network.

8. Fixed telecommunication's network **characterized in, that** it includes means for carrying out the method according to claim 1.
